(19) Europäisches Patentamt
European Patent Office
Office européen des brevets

(11) EP 1 142 960 A2

(12) **EUROPÄISCHE PATENTANMELDUNG**

(43) Veröffentlichungstag:
**10.10.2001 Patentblatt 2001/41**

(51) Int Cl.⁷: **C09B 45/14**
// C08K5/3462

(21) Anmeldenummer: **01106402.9**

(22) Anmeldetag: **21.03.2001**

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(30) Priorität: **03.04.2000 DE 10016547**

(71) Anmelder: **BAYER AG**
**51368 Leverkusen (DE)**

(72) Erfinder:
- **Herrmann, Udo, Dr.**
**41541 Dormagen (DE)**
- **Weismantel, Lothar, Dr.**
**51065 Köln (DE)**
- **Linke, Frank**
**51069 Köln (DE)**
- **Göbel, Ronald**
**51371 Leverkusen (DE)**
- **Krumbach, Bernhard**
**51377 Leverkusen (DE)**
- **Frank, Wolfgang, Dr.**
**50939 Köln (DE)**

(54) **Kontinuierliches Herstellungsverfahren für Metallkomplexpigmente**

(57) Kontinuierliches Verfahren zur Herstellung von Metallkomplexen mehrwertiger Metallionen mit Mono-, Di-, Tri- oder Tetraanionen einer Azo-Verbindung, die der Formel (I) oder einer ihrer tautomeren Strukturen entspricht

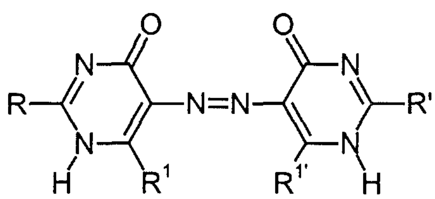

(I),

in der R und R' unabhängig voneinander für OH, $NH_2$, NH-CN, Arylamino, Acylamino oder p-Chlorphenyl stehen und $R^1$ und $R^{1'}$ unabhängig voneinander -OH oder -$NH_2$ bedeuten, und die wenigstens eine davon verschiedene Verbindung (Interkalat) eingelagert enthalten, durch

Verrühren einer Dispersion aus dem Alkalisalz der Verbindung (I) mit dem Metallsalz des ausgewählten mehrwertigen Metalls bei einer Temperatur von 10 bis 35°C über einen Zeitraum von 1 bis 25 min.,

Zumischen einer wässrigen Lösung, Dispersion oder Emulsion des genannten Interkalates, gegebenenfalls unter Zerkleinern der Feststoffpartikel der Mischung, vor und/oder nach dem Zumisches des Interkalates,

Durchleiten der Mischung durch eine Reaktionszone mit einer Temperatur von mindestens 85-140°C, bei einer Verweilzeit von 1 bis 15 min,

gegebenenfalls unter Regeln des pH-Wertes der Mischung auf einen Wert von pH 0,5 bis 3,

Einstellen des pH-Wertes der Mischung auf einen Wert von mindestens 5 und Isolieren des fertigen Metallkomplex-Interkalates.

EP 1 142 960 A2

## Beschreibung

Die Erfindung betrifft ein neues kontinuierliches Herstellungsverfahren für Metallkomplexpigmente, insbesondere für Metallkomplex-Interkalate der Azobarbitursäure und ihrer Derivate.

In der unveröffentlichten deutschen Patentanmeldung mit dem Aktenzeichen 19924763.3 werden Metallkomplexe von substituierten Azo-Verbindungen und ein Batch-Verfahren zu ihrer Herstellung beschrieben. Bei dem Verfahren werden Azo-verbindungen der Formel (A)

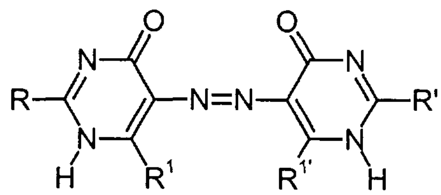

(A),

worin

| | |
|---|---|
| R und R' | unabhängig voneinander für OH, $NH_2$, NH-CN, Acylamino oder Arylamino stehen und |
| $R^1$ und $R^{1'}$ | unabhängig voneinander -OH oder -$NH_2$ bedeuten, |

mit einem Metallsalz von Metallen, ausgewählt aus der Gruppe Ba, Ca, Zn, Cu, Fe, Co, Sr, Cr, Sn, Al, Mg, Cd, Pb und La komplexiert und der entstandene Metallkomplex mit einer einzulagernden Verbindung (Interkalat) umgesetzt.

Einschlussverbindungen, Interkalationsverbindungen und feste Lösungen von Metallkomplexen an sich sind aus der Literatur bekannt. Sie werden ebenso wie deren Herstellung beispielsweise in der EP 074 515 A1 beschrieben.

Zur Herstellung der genannten Pigmente im Batch-Verfahren wird zunächst das Alkalimetallsalz der Azobarbitursäure oder ihrer Derivate (Formel I) in Wasser dispergiert, anschließend mit der entsprechenden Menge des mehrwertigen Metallsalzes und einer entsprechenden Menge des Interkalates versetzt. Die Mischung muss dann über mehrere Stunden bei 95°C gerührt werden. Die reagierte Mischung wird schließlich auf einen pH von ca. 5 eingestellt und das fertige Produkt isoliert.

Der besondere Nachteil des genannten Batch-Verfahrens ist, dass insbesondere bei größeren Kesselvolumen die Aufheizung der Mischung nicht in der gewünschten Gleichmäßigkeit erfolgen kann. Eine Folge solcher Temperaturgradienten ist, dass miteinander konkurrierende Verlackungs- und Interkalationsreaktionen erfolgen. Ein weiterer Nachteil des Batch-Verfahrens ist das Auftreten eines unerwünschten Anteils besonders feinteiliger Produkte (d.h. mit einem mittlerem Teilchendurchmesser von kleiner als 50 nm). Diese absorbieren in Pigmentformierungen einen Großteil des für die Formierung verwendeten Dispergiermittels und tragen dann kaum zur gewünschten Farbstärke des Produktes bei.

Die Dispergierhärte des Produktes beträgt gewöhnlich mehr als 300, so dass für Anwendungen, in denen eine schnelle Farbstärkeentwicklung notwendig ist, das Produkt aus einem Batchverfahren noch einer nachfolgenden zusätzlichen Temperung unterworfen werden muss.

Ein weiterer Nachteil ist die von Batchansatz zu Batchansatz schwankende Produktqualität bezüglich der Farbe, Teilchengröße und Härte der Produkte. Diese wird durch den Mangel an Regelungsmöglichkeiten im Batchverfahren bedingt.

Aufgabe der Erfindung ist es ein Verfahren bereitzustellen, das die genannten Nachteile des Batchverfahrens vermeidet und eine sichere und schwankungsarme Herstellung der eingangs genannten Metallkomplex-Interkalate ermöglicht. Dabei soll in einem kontinuierlichen Verfahren in einer ersten Stufe die Verlackung der Azobarbitursäureverbindung mit mehrwertigen Ionen und in der zweiten Stufe die Interkalation stattfinden.

Gegenstand der Erfindung ist ein kontinuierliches Verfahren zur Herstellung von Metallkomplexen mehrwertiger Metallionen mit Mono-, Di-, Tri- oder Tetraanionen einer Azo-Verbindung, die der Formel (I) oder einer ihrer tautomeren Strukturen entspricht

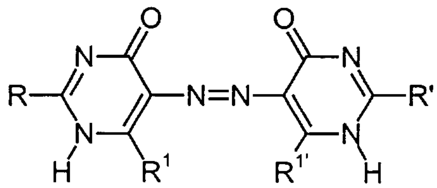

(I),

in der

R und R' unabhängig voneinander für die Reste -OH, $-NH_2$, -NH-CN, Arylamino, Acylamino oder p-Chlorphenyl stehen und

$R^1$ und $R^{1'}$ unabhängig voneinander -OH oder $-NH_2$ bedeuten,

die wenigstens eine von den vorgenannten chemischen Verbindungen verschiedene Verbindung (Interkalat) eingelagert enthalten,
wobei die Metalle der mehrwertigen Metallionen aus der folgenden Gruppe Ca, Zn, Cu, Fe, Mn, Ni, Co, Sr, Ba, Cr, Sn, Al, Mg, Cd, Pb und La ausgewählt sind

durch Verrühren einer insbesondere wässrigen Dispersion aus dem Alkalisalz der Verbindung (I) mit dem Metallsalz des ausgewählten mehrwertigen Metalls bei einer Temperatur von 10 bis 35°C, insbesondere 20 bis 25°C, insbesondere über einen Zeitraum von 1 bis 25 min. bevorzugt von 5 bis 20 min., gegebenenfalls bei einem pH von 0,5 bis 5,5,

Zumischen einer wässrigen Lösung, Dispersion oder Emulsion des genannten Interkalates, gegebenenfalls unter Zerkleinern der Feststoffpartikel (Agglomerate) der Mischung vor und/oder nach dem Zumischen des Interkalates,

Durchleiten der Mischung durch eine Reaktionszone (18) mit einer Temperatur von 85 bis 140°C, bevorzugt 110 bis 120°C, unter einem Druck von $10^5$ bis $4 \cdot 10^5$ Pa, insbesondere bei einer Verweilzeit von 1 bis 15 min., vorzugsweise von 2 bis 10 min., in der Reaktionszone (18),

unter Regeln des pH-Wertes der in die Reaktionszone (18) eintretenden Mischung, so dass die die Reaktionszone (18) verlassende Produktdispersion auf einen Wert von pH 0,5 bis pH 3 eingestellt ist,

anschließend Einstellen des pH-Wertes der Mischung auf einen Wert von mindestens pH 5 und Isolieren des fertigen Metallkomplex-Interkalates.

Bevorzugt ist es, dass das Zerkleinern der Feststoffpartikel der Mischung in einem Umpumpkreislauf, bevorzugt unter Durchleiten der Mischung durch ein Cavitron (8) erfolgt.
Besonders bevorzugt ist es, dass der pH-Wert in der Reaktionszone (18) unter Zugabe von starken und schwachen Basen z.B. von Pufferverbindungen wie Na-Acetat eingestellt wird.
Arylsubstituenten in der Formel (I) sind vorzugsweise Phenyl- oder Naphthyl-, die gegebenenfalls durch Halogen wie F, Cl, Br, oder durch einen Rest -OH, $C_1$-$C_6$-Alkyl, $C_1$-$C_6$-Alkoxy, $-NH_2$, $-NO_2$ oder -CN substituiert sein können.
Acylsubstituenten in der Formel (I) sind vorzugsweise ausgewählt aus der Reihe ($C_1$-$C_6$-Alkyl)-carbonyl, Phenylcarbonyl, $C_1$-$C_6$-Alkylsulfonyl, Phenylsulfonyl, gegebenenfalls durch die Reste $C_1$-$C_6$-Alkyl, Phenyl oder Naphthyl substituiertes Carbamoyl, gegebenenfalls durch die Reste $C_1$-$C_6$-Alkyl, Phenyl oder Naphthyl substituiertes Sulfamoyl oder gegebenenfalls durch die Reste $C_1$-$C_6$-Alkyl, Phenyl oder Naphthyl substituiertes Guanyl, wobei die genannten Alkylreste zusätzlich gegebenenfalls durch Halogen wie Cl, Br, F, -OH, -CN, $-NH_2$ oder $C_1$-$C_6$-Alkoxy substituiert sein können und die genannten Phenyl- und Naphthylreste gegebenenfalls zusätzlich durch Halogen wie F, Cl, Br, -OH, $C_1$-$C_6$-Alkyl, $C_1$-$C_6$-Alkoxy, $-NH_2$, $-NO_2$ und -CN substituiert sein können.
Unter Metallkomplexen werden im Rahmen dieser Anmeldung auch Metallsalze der Azobarbitursäure(derivate) mit zweiwertigen Metallionen verstanden.
Ganz besonders bevorzugt dem Verfahren zugängliche Metallkomplexe sind solche von Azo-Verbindungen der Formel (I), die in Form ihrer freien Säure der Formel (II) oder einer ihrer tautomeren Strukturen entsprechen

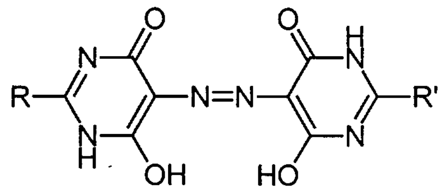

(II),

in der
R und R' unabhängig voneinander OH und NHCN bedeuten,
die wenigstens eine andere Verbindung (Interkalat) eingeschlossen enthalten.

Bevorzugt vor allem sind dabei organische Metallkomplexe solcher Azo-Verbindungen der Formel (II), die in Form ihrer freien Säure einer der tautomeren Strukturen der Formeln (IIa bis IIc) entsprechen

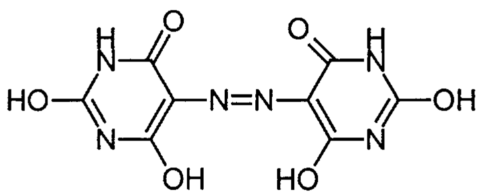

(IIa),

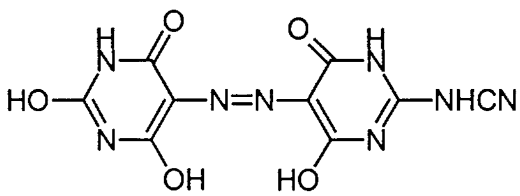

(IIb),

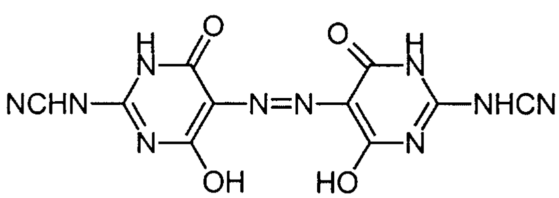

(IIc).

Besonders bevorzugt werden mit dem erfindungsgemäßen Verfahren 1:1 Azo-Metall-Komplexe hergestellt, die der Formel (Ia) oder einer ihrer tautomeren Formen entsprechen

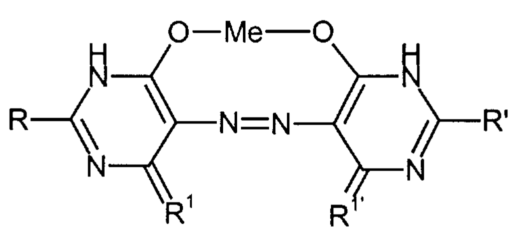

(Ia),

worin

Me eines der unter Formel (I) genannten Metallionen entspricht, insbesondere für Ni, Mn, Cd oder Sn steht,

R und R' die oben unter Formel (I) angegebenen Bedeutungen besitzen und

$R^1$ und $R^{1'}$ unabhängig voneinander = O oder =NH bedeuten.

Im allgemeinen bildet die aus dem erfindungsgemäßen Verfahren erhältliche Metallkomplexverbindung ein schichtförmiges Kristallgitter, bei dem die Bindung zwischen Interkalat und Metallkomplex innerhalb einer Schicht im wesentlichen über Wasserstoffbrücken und/oder Metallionen erfolgt. Vorzugsweise handelt es sich dabei um Metallverbindungen, die ein Kristallgitter ausbilden, das aus im wesentlichen ebenen Schichten besteht.

Als Metallkomplexe kommen auch solche in Frage, bei denen eine metallhaltige Verbindung, z.B. ein Salz oder Metallkomplex in das Kristallgitter des Metallkomplexes eingebaut ist. In diesem Fall kann in Formel (I) ein Teil des Metalls durch andere Metallionen ersetzt sein oder es können weitere Metallionen in eine mehr oder weniger starke Wechselwirkung mit dem Metallkomplex treten.

Eingeschlossen sein können sowohl organische als auch anorganische feste oder flüssige Verbindungen. Verbindungen, die eingeschlossen sein können, entstammen den verschiedenartigsten Verbindungsklassen. Aus rein praktischen Gründen sind solche Verbindungen bevorzugt, die unter Normalbedingungen (25°C, 1 bar) flüssig oder fest sind.

Von den flüssigen Substanzen sind wiederum solche bevorzugt, die einen Siedepunkt von 100°C oder darüber, bevorzugt von 150°C und darüber, aufweisen. Geeignete Verbindungen sind vorzugsweise acyclische und cyclische organische Verbindungen, z.B. aliphatische und aromatische Kohlenwasserstoffe, die substituiert sein können, z.B. durch OH, COOH, $NH_2$, substituiertes $NH_2$, $CONH_2$, substituiertes $CONH_2$, $SO_2NH_2$, substituiertes $SO_2NH_2$, $SO_3H$, Halogen, $NO_2$, CN, $-SO_2$-Alkyl, $-SO_2$-Aryl, -O-Alkyl, -O-Aryl, -O-Acyl.

Substituenten in den genannten Kohlenwasserstoffinterkalatverbindungen in der Bedeutung von Aryl bezeichnen vorzugsweise Phenyl oder Naphthyl, die beispielsweise durch Halogen wie F, Cl, Br, -OH, $C_1$-$C_6$-Alkyl, $C_1$-$C_6$-Alkoxy, $-NH_2$, $-NO_2$ und -CN substituiert sein können.

Substituenten in den genannten Kohlenwasserstoffinterkalatverbindungen in der Bedeutung von Alkyl bezeichnen vorzugsweise $C_1$-$C_6$-Alkyl, das beispielsweise durch Halogen, wie Chlor, Brom, Fluor, -OH, -CN, $-NH_2$ oder $C_1$-$C_6$-Alkoxy substituiert sein kann.

Substituenten in den genannten Kohlenwasserstoffinterkalatverbindungen in der Bedeutung von Cycloalkyl bezeichnen vorzugsweise $C_3$-$C_7$-Cycloalkyl, insbesondere $C_5$-$C_6$-Cycloalkyl, das beispielsweise durch $C_1$-$C_6$-Alkyl, $C_1$-$C_6$-Alkoxy, Halogen wie Cl, Br, F, $C_1$-$C_6$-Alkoxy, -OH, -CN und $NH_2$ substituiert sein kann.

Substituenten in den genannten Kohlenwasserstoffinterkalatverbindungen in der Bedeutung von Aralkyl bezeichnen bevorzugt Phenyl- oder Naphthyl-$C_1$-$C_4$-alkyl, die in den aromatischen Resten beispielsweise durch Halogen wie F, Cl, Br, -OH, $C_1$-$C_6$-Alkyl, $C_1$-$C_6$-Alkoxy, $-NH_2$, $-NO_2$ und -CN substituiert sein können.

Substituenten in den genannten Kohlenwasserstoffinterkalatverbindungen in der Bedeutung von Acyl bezeichnen vorzugsweise ($C_1$-$C_6$-Alkyl)-carbonyl, Phenylcarbonyl, $C_1$-$C_6$-Alkylsulfonyl, Phenylsulfonyl, gegebenenfalls durch $C_1$-$C_6$-Alkyl, Phenyl und Naphthyl substituiertes Carbamoyl, gegebenenfalls durch $C_1$-$C_6$-Alkyl, Phenyl und Naphthyl substituiertes Sulfamoyl oder gegebenenfalls durch $C_1$-$C_6$-Alkyl, Phenyl und Naphthyl substituiertes Guanyl, wobei die genannten Alkylreste beispielsweise durch Halogen wie Cl, Br, F, -OH, -CN, $-NH_2$ oder $C_1$-$C_6$-Alkoxy substituiert sein können und die genannten Phenyl- und Naphthylreste beispielsweise durch Halogen wie F, Cl, Br, -OH, $C_1$-$C_6$-Alkyl, $C_1$-$C_6$-Alkoxy, $-NH_2$, $-NO_2$ und -CN substituiert sein können.

Im einzelnen seien als bevorzugt geeignete Interkalate genannt: Paraffine und Paraffinöle; Triisobutylen, Tetraisobutylen, Mischungen von aliphatischen und aromatischen Kohlenwasserstoffen, wie sie z.B. bei der Erdölfraktionierung anfallen; chlorierte Paraffinkohlenwasserstoffe wie Dodecylchlorid oder Stearylchlorid; $C_{10}$-$C_{30}$-Alkohole wie 1-Decanol, 1-Dodecanol, 1-Hexadecanol, 1-Octadecanol und ihre Mischungen, Oleinalkohol, 1,12-Octadecandiol, Fettsäuren und ihre Salze und Mischungen, z.B. Ameisensäure, Essigsäure, Dodecansäure, Hexadecansäure, Octadecansäure, Ölsäure, Fettsäureester, z.B. die Methylester der $C_{10}$-$C_{20}$-Fettsäuren, Fettsäureamide, wie Stearinsäureamid, Stearinsäuremonoethanolamid, Stearinsäurediethanolamid, Stearinsäurenitril, Fettamine, z.B. Dodecylamin, Cetylamin, Hexadecylamin, Octadecylamin und andere; Salze von Fettaminen mit Sulfon- und Carbonsäuren, isocyclische Kohlenwasserstoffe wie Cyclododecan, Decahydronaphthalin, o-, m-, p-Xylol, Mesitylen, Dodecylbenzolgemisch, Tetralin, Naphthalin, 1-Methylnaphthalin, 2-Methylnaphthalin, Biphenyl, Diphenylmethan, Acenaphthen, Fluoren, Anthracen, Phenanthren, m-, p-Terphenyl, o-, p-Dichlorbenzol, Nitrobenzol, 1-Chlornaphthalin, 2-Chlornaphthalin, 1-Nitronaphthalin, isocyclische Alkohole und Phenole und ihre Abkömmlinge wie Benzylalkohol, Decahydro-2-naphthol, Diphenylether, Sulfone, z.B. Diphenylsulfon, Methylphenylsulfon, 4,4'-Bis-2-(hydroxyethoxy)-diphenylsulfon; isocyclische Carbonsäuren und ihre Derivate wie Benzoesäure, 3-Nitrobenzoesäure, Zimtsäure, 1-Naphthalincarbonsäure, Phthalsäure, Phthalsäuredibutylester, Phthalsäuredioctylester, Tetrachlorphthalsäure, 2-Nitrobenzamid, 3-Nitrobenzamid, 4-Nitrobenzamid, 4-Chlorbenzamid, Sulfonsäuren, wie 2,5-Dichlorbenzolsulfonsäure, 3-Nitro-, 4-Nitro-benzolsulfonsäure, 2,4-Dimethylbenzolsulfonsäure, 1- und 2-Naphthalinsulfonsäure, 5-Nitro-1- und 5-Nitro-2-naphthalinsulfonsäure, Di-sec.-butyl-naphthalinsulfonsäuregemisch, Biphenyl-4-sulfonsäure, 1,4-, 1,5-, 2,6-, 2,7-Naphthalindisulfonsäure, 3-Nitro-1,5-naphthalindisulfonsäure, Anthrachinonsulfonsäure-1, Anthrachinonsulfonsäure-2, Diphenyl-4,4'-disulfonsäure, 1,3,6-Naphthalintrisulfonsäure und die Salze dieser Sulfonsäuren z.B. die Natrium-, Kalium-, Calcium-, Zink-, Nickel- und Kupfersalze; Sulfonamide wie Benzolsulfonamid, 2-, 3- und 4-Nitrobenzolsulfonamid, 2-, 3- und 4-Chlorbenzolsulfonamid, 4-Methoxy-benzolsulfonamid, 3,3'-Sulfonylbisbenzolsulfonamid, 4,4'-Oxybisbenzolsulfonsäureamid, 1- und 2-Naphthalinsulfonsäureamid.

Carbonsäure- und Sulfonsäureamide sind eine bevorzugte Gruppe von einzuschließenden Verbindungen (Interkalaten), insbesondere geeignet sind auch Harnstoff und substituierte Harnstoffe wie Phenylharnstoff, Dodecylharnstoff und andere, sowie deren Polykondensate mit Aldehyden, insbesondere Formaldehyd; Heterocyclen wie Barbitursäure, Benzimidazolon, Benzimidazolon-5-sulfonsäure, 2,3-Dihydroxychinoxalin, 2,3-Dihydroxychinoxalin-6-sulfonsäure, Carbazol, Carbazol-3,6-disulfonsäure, 2-Hydroxychinolin, 2,4-Dihydroxychinolin, Caprolactam, Melamin, 6-Phenyl-1,3,5-triazin-2,4-diamin, 6-Methyl-1,3,5-triazin-2,4-diamin und Cyanursäure.

Besonders bevorzugt einzusetzende Interkalate sind auch grenzflächenaktive Verbindungen, insbesondere Tenside, die z.B. aus K. Lindner, Tenside-Textilhilfsmittel-Waschrohstoffe, 2. Auflage, Band I, Wissenschaftliche Verlagsgesellschaft mbH, Stuttgart, 1964, bekannt sind. Dabei kann es sich um anionenaktive, nichtionogene oder kationenaktive Verbindungen oder um Ampholyte handeln. Geeignete anionenaktive Verbindungen sind z.B.: Echte Seifen, Salze der Aminocarbonsäuren, Salze niederer bzw. höherer acylierter Aminocarbonsäuren, Fettsäuresulfate, Sulfate von Fettsäureestern, -amiden usw., primäre Alkylsulfate, Sulfate von Oxoalkoholen, sekundäre Alkylsulfate, Sulfate veresterter oder veretherter Polyoxyverbindungen, Sulfate substituierter Polyglykolether (sulfatierte Ethylenoxidaddukte), Sulfate acylierter oder alkylierter Alkanolamine, Sulfonate von Fettsäuren, ihren Estern, Amiden usw., primäre Alkylsulfonate, sekundäre Alkylsulfonate, Alkylsulfonate mit esterartig gebundenen Acylen, Alkyl- bzw. Alkylphenylethersulfonate, Sulfonate von Polycarbonsäureestern, Alkylbenzolsulfonate, Alkylnaphthalinsulfonate, fettaromatische Sulfonate, Alkylbenzimidazolsulfonate, Phosphate, Polyphosphate, Phosphonate, Phosphinate, Thiosulfate, Hydrosulfite, Sulfinate, Persulfate. Geeignete nicht-ionogene Verbindungen sind z.B.: Ester und Ether von Polyalkoholen, Alkylpolyglykolether, Acylpolyglykolether, Alkylarylpolyglykolether, acylierte bzw. alkylierte Alkanolaminpolyglykolether. Geeignete kationenaktive Verbindungen sind z.B.: Alkylaminsalze, quaternäre Ammoniumsalze, Alkylpyridiniumsalze, einfache und quaternäre Imidazolinsalze, Alkyldiamine bzw. Alkylpolyamine, Acyldiamine bzw. Acylpolyamine, Acylalkanolamine, Alkanolaminester, Alkyl-$OCH_2$-N-pyridiniumsalze, Alkyl-CO-NH-$CH_2$-N-pyridiniumsalze, Alkylethylenharnstoffe, Sulfoniumverbindungen, Phosphoniumverbindungen, Arseniumverbindungen, Alkylguanidine, Acylbiguanidide. Geeignete Ampholyte sind z.B.: Alkylbetaine, Sulfobetaine und Aminocarbonsäuren. Bevorzugt eingesetzt werden nichtionogene Tenside, insbesondere die Ethylenoxidadditionsprodukte von Fettalkoholen, Fettaminen sowie von Octyl- oder Nonylphenol.

Eine weitere wichtige Gruppe von bevorzugt geeigneten Interkalaten sind natürliche Harze und Harzsäuren wie z.B. Abietinsäure und ihre Umwandlungsprodukte und ihre Salze. Solche Umwandlungsprodukte sind z.B. hydrierte, dehydrierte und disproportionierte Abietinsäuren. Diese können weiterhin dimerisiert, polymerisiert oder durch Addition von Maleinsäureanhydrid und Fumarsäure modifiziert sein. Von Interesse sind auch die an der Carboxylgruppe modifizierten Harzsäuren wie z.B. die Methyl-, Hydroxyethyl-, Glykol-, Glycerin- und Pentaerythritester, sowie Harzsäurenitrile und Harzsäureamine sowie Dehydroabietylalkohol.

Ebenfalls besonders als Interkalate geeignete Verbindungen sind Polymere, z.B. Ethylen-propylenoxid-Blockcopolymere, vorzugsweise mit einem Molekulargewicht (Zahlenmittel) $M_n$ größer gleich 1 000, insbesondere von 1 000 bis 10 000 g/mol Polyvinylalkohol, Poly-(meth)-acrylsäuren, modifizierte Cellulose, wie Carboxymethylcellulosen, Hydroxyethyl- und -propylcellulosen, Methyl- und Ethylhydroxyethylcellulosen.

Ebenfalls für die Einlagerung geeignet sind Kondensationsprodukte auf Basis von

A) sulfonierten Aromaten,

B) Aldehyden und/oder Ketonen und gegebenenfalls

C) einer oder mehrerer Verbindungen, ausgewählt aus der Gruppe der nicht sulfonierten Aromaten, Harnstoff und Harnstoffderivaten.

Auf Basis von bedeutet, dass das Kondensationsprodukt gegebenenfalls aus weiteren Reaktanden neben A, B und gegebenenfalls C hergestellt wurde. Vorzugsweise werden die Kondensationsprodukte im Rahmen dieser Anmeldung jedoch nur aus A, B und gegebenenfalls C hergestellt.

Als sulfonierte Aromaten der Komponente A) werden im Rahmen dieser Anmeldung auch sulfomethylierte Aromaten verstanden. Bevorzugte sulfonierte Aromaten sind: Naphthalinsulfonsäuren, Phenolsulfonsäuren, Dihydroxybenzolsulfonsäuren, sulfonierte Ditolylether, sulfomethyliertes 4,4'-Dihydroxydiphenylsulfon, sulfoniertes Diphenylmethan, sulfoniertes Biphenyl, sulfoniertes Hydroxybiphenyl, insbesondere 2-Hydroxybiphenyl, sulfoniertes Terphenyl oder Benzolsulfonsäuren.

Als Aldehyde und/oder Ketone der Komponente B) kommen insbesondere aliphatische, cycloaliphatische sowie aromatische in Frage. Bevorzugt sind aliphatische Aldehyde, wobei besonders bevorzugt Formaldehyd sowie andere aliphatische Aldehyde mit 3 bis 5 C-Atomen in Frage kommen.

Als nicht sulfonierte Aromaten der Komponente C) kommen beispielsweise Phenol, Kresol, 4,4'-Dihydroxydiphenylsulfon oder Dihydroxydiphenylmethan in Frage.

Als Harnstoffderivate können beispielsweise Dimethylolharnstoff, Alkylharnstoffe, Melamin oder Guanidin genannt werden.

Als bevorzugtes Kondensationsprodukt wird eines auf Basis von

A) wenigstens einem sulfonierten Aromaten, ausgewählt aus der Gruppe von Naphthalinsulfonsäuren, Phenolsulfonsäuren, Dihydroxybenzolsulfonsäuren, sulfonierte Ditolylether, sulfomethyliertes 4,4'-Dihydroxydiphenylsulfon, sulfoniertes Diphenylmethan, sulfoniertes Biphenyl, sulfoniertes Hydroxybiphenyl, insbesondere 2-Hydroxybiphenyl, sulfoniertes Terphenyl und Benzolsulfonsäuren,

B) Formaldehyd und gegebenenfalls

C) einer oder mehreren Verbindungen, ausgewählt aus der Gruppe von Phenol, Kresol, 4,4'-Dihydroxydiphenylsulfon, Dihydroxydiphenylmethan, Harnstoff, Dimethylolharnstoff, Melamin und Guanidin

eingesetzt.

Bevorzugte Kondensationsprodukte sind solche auf Basis von 4,4'-Dihydroxydiphenylsulfon, sulfonierter Ditolylether und Formaldehyd; 4,4'-Dihydroxydiphenylsulfon, Phenolsulfonsäure und Formaldehyd; 4,4'-Dihydroxydiphenylsulfon, Natriumbisulfit, Formaldehyd und Harnstoff; Naphthalinsulfonsäure, 4,4'-Dihydroxydiphenylsulfon und Formaldehyd; sulfoniertes Terphenyl und Formaldehyd; und/oder sulfoniertes 2-Hydroxybiphenyl und Formaldehyd sowie Naphthalinsulfonsäure und Formaldehyd.

Bevorzugt ist es, dass die eingelagerte Verbindung (Interkalat) eine cyclische oder acyclische organische Verbindung ist, insbesondere Melamin oder ein Melaminderivat oder ein Polykondensat, bevorzugt solche auf Basis von Harnstoff und Formaldehyd oder ein Ethylenoxid-propylenoxid Blockcopolymerisat ist.

Besonders bevorzugt werden als eingelagerte Verbindungen Melamin oder Melaminderivate, insbesondere solche der Formel (III)

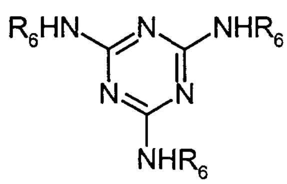

(III)

eingesetzt, worin

$R_6$ für Wasserstoff, $C_1$-$C_4$-Alkyl, das gegebenenfalls mit OH-Gruppen substituiert ist oder für Phenyl steht,

ganz besonders bevorzugt, worin

$R_6$ für Wasserstoff steht.

Eine ebenfalls bevorzugte Einlagerungsverbindung ist Phenyldiaminotriazin.

Die Menge an Interkalat, die in das Kristallgitter des Metallkomplexes bei Durchführung des erfindungsgemäßen Verfahrens eingelagert werden kann, liegt in der Regel bei 5 % bis 200 Gew.-%, bezogen auf die Menge an Azobarbitursäure Metallkomplex. Bevorzugt eingelagert werden 10 bis 100 Gew.-% Interkalat. Es handelt sich hierbei um die Menge an Substanz, die durch geeignete Lösungsmittel nicht auswaschbar ist und die sich aus der Elementaranalyse ergibt. Naturgemäß kann auch mehr oder weniger als die genannte Menge an Interkalat zugesetzt werden, wobei man gegebenenfalls darauf verzichten kann, einen Überschuss auszuwaschen. Bevorzugt werden Mengen von 10 bis 150 Gew.-% Interkalat im Verfahren eingesetzt.

Eine ebenfalls bevorzugte Ausführungsform des erfindungsgemäßen Verfahrens ist dadurch gekennzeichnet, dass man zur Herstellung von 1:1 Azo-Metall-Komplexen, die der Formel (Ia) oder einer ihrer tautomeren Formen entsprechen,

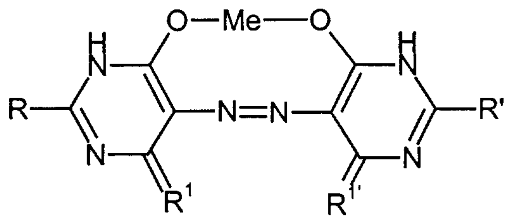

(Ia)

worin
Me die in Anspruch 1 genannten Metalle bedeutet,
R und R' und $R^1$ und $R^{1'}$ die oben angegebenen Bedeutungen besitzen äquimolare Mengen des Na-, Li- oder K-Salzes der Azoverbindung und des Metallsalzes einsetzt.

Die nach dem erfindungsgemäßen Verfahren erhältlichen Metallkomplexe der Azo-verbindungen, die ein Interkalat eingelagert enthalten, besitzen einen Farbort, der durch die folgenden Bereiche der sogenannten Normfarbwertanteile x und y definiert ist:

Die Farborte werden an Alkyd-Melamin-Lacken nach DIN 53 238 bestimmt, in denen die Pigmente völlig dispergiert vorliegen.

$$x = \frac{X}{X+Y+Z} \qquad y = \frac{Y}{X+Y+Z},$$

wobei
X, Y und Z Normfarbwerte sind.

Das Normfarbsystem ist beschrieben in Bayer Farben Revue, Sonderheft 3/2 D, 1986; S. 12-14.

Als Metallsalz für die Verlackungsreaktion zwischen Azobarbitursäure(derivat) und Metallsalz kommen vorzugsweise wasserlösliche Metallsalze der oben genannten Metalle in Frage, insbesondere Chloride, Bromide, Acetate, Nitrate der Metalle. Bevorzugt eingesetzte Metallsalze besitzen eine Wasserlöslichkeit von mehr als 20 g/l, insbesondere mehr als 50 g/l bei 20°C.

Besonders geeignete Metallsalze für das Herstellungsverfahren sind: Magnesiumchlorid, Magnesiumsulfat, Calciumchlorid, Calciumacetat, Calciumformiat, Bariumchlorid, Bariumnitrat, Bariumacetat, Bariumcarbonat, Strontiumnitrat, Manganchlorid, Mangansulfat, Eisen-(III)-chlorid, Eisen-(III)-nitrat, Eisen-(II)-sulfat, Cobaltchlorid, Cobaltnitrat, Cobaltsulfat, Nickelformiat, Nickelnitrat, Nickelsulfat, Nickelchlorid, Nickelacetat, Aluminiumsulfat, Aluminiumnitrat, Chrom-(III)-sulfat, Chrom(III)-nitrat, Zinkchlorid, Zinksulfat, Zinkacetat, Cadmiumchlorid, Cadmiumsulfat, Cadmiumnitrat, Kupfer-(II)-sulfat, Kupfer-(II)-chlorid, Kupfer-(II)-acetat und Kupfer-(II)-formiat, Lanthannitrat und Aluminiumchloridhydrat.

Man kann auch Mischungen dieser Salze, die verschiedene der genannten Metalle enthalten, verwenden. Die Verwendung von solchen Salzmischungen empfiehlt sich insbesondere für die Erzielung von Zwischentönen der farbigen Endprodukte.

Die nach dem erfindungsgemäßen Verfahren erhaltenen Metallkomplexe können durch Filtration ihrer wässrigen Suspension als wässriger Presskuchen isoliert werden. Dieser Presskuchen kann beispielsweise nach Waschen mit heißem Wasser, nach üblichen Trocknungsverfahren getrocknet werden.

Mit dem Verfahren werden Metallkomplexinterkalate mit einer Dispergierhärte von kleiner 200 (gemessen in Anlehnung an DIN 53 775, Teil 7) erhältlich, wobei die Temperatur der Kaltwalzung 25°C, die der Warmwalzung 150°C, beträgt.

Sämtliche in dieser Anmeldung angegebenen Dispergierhärten wurden nach dieser modifizierten Methode bestimmt.

Im Rahmen dieser Anmeldung werden die Metallkomplexe einer Azoverbindung der Formel (I), die wenigstens eine Verbindung eingelagert enthalten, als auch Pigmente bezeichnet. Die Erfindung betrifft daher auch Pigmentpräparationen, enthaltend wenigstens ein nach dem erfindungsgemäßen Verfahren hergestellten Pigment und ein Dispergiermittel.

Unter Dispergiermittel im Rahmen dieser Anmeldung wird eine die Pigmentteilchen in ihrer feinen partikulären Form in wässrigen Medien stabilisierende Substanz verstanden. Unter fein partikulär wird vorzugsweise eine Feinverteilung von 0,001 bis 5 um verstanden, insbesondere von 0,005 bis 1 µm, besonders bevorzugt von 0,005 bis 0,5 µm.

Die nach dem erfindungsgemäßen Verfahren erhältlichen Metallkomplexe eignen sich hervorragend für alle Pigmentanwendungszwecke. Zum Beispiel eignen sie sich zum Pigmentieren von Lacken aller Art für die Herstellung von Druckfarben, Leimfarben oder Binderfarben, für die Massefärbung von synthetischen, halbsynthetischen oder

natürlichen makromolekularen Stoffen, wie z.B. Polyvinylchlorid, Polystyrol, Polyamid, Polyethylen oder Polypropylen. Sie können auch für die Spinnfärbung von natürlichen, regenerierten oder künstlichen Fasern, wie z.B. Cellulose-, Polyester-, Polycarbonat-, Polyacrylniril- oder Polyamidfasern, sowie zum Bedrucken von Textilien und Papier verwendet werden. Aus diesen Pigmenten können feinteilige, stabile, wässrige Pigmentierung von Dispersions- und Anstrichfarben, für die Papierfärbung, für den Pigmentdruck von Textilien, für den Laminatdruck oder für die Spinnfärbung von Viskose brauchbar sind, durch Mahlen oder Kneten in Gegenwart von nichtionogenen, anionischen oder kationischen Tensiden hergestellt werden.

Die Erfindung wird nachfolgend beispielhaft anhand des Verfahrensschemas gemäß Figur 1 näher erläutert.

## Beispiele

### Allgemeine Verfahrensbeschreibung

In einem Vorratsbehälter 1 wird eine Dispersion aus dem Alkalisalz des Azobarbitursäurederivates und des Metallsalzes bei einer Temperatur von ca. 20°C gerührt und in dem in einen Umpumpkreislauf geschalteten Cavitron 8 zerkleinert.

In dem Vorratsbehälter 2 wird die wässrige Zubereitung des Interkalates vorgelegt. Die Lösungen aus den Vorratsbehältern 1 und 2 werden zusammengemischt, wobei die Mischungsverhältnisse der Eduktströme mittels der Steuerung der Förderpumpen 9 und 10 eingestellt werden können.

Die Hähne 47 und 43 werden geöffnet, die Hähne 37 und 34 geschlossen. Die Stoffströme aus Metallkomplex A und Interkalatdispersion B werden in der Mischdüse 22 gemischt und durchlaufen dann den Reaktor 18. Mit der pH Sonde 16 wird der pH Wert der Reaktionsmischung gemessen und gegebenenfalls durch Zusatz von Lauge oder Acetat-Pufferlösung aus Behälter 3 in der Mischdüse 22 auf den gewünschten Wert eingestellt. Hahn 26 ist geschlossen. Nach Passieren der Lochblendenkaskade 20 (Drosseldüse) fließt das Gemisch in das Auffanggefäß 6, in dem das Gemisch durch Zudosierung von Basen aus dem Vorrat 5 auf pH 5 eingestellt wird (pH-Meter 19).

Die Hähne 39, 40, 41 und 42 sind die Ablasshähne der Vorratsgefäße 1 bis 4.

Die Ventile 29, 30, 33, 36 sind Überdruckventile, die als Sicherheitsventile eingebaut werden.

Bei einem Produktrückstau und dem damit verbundenen Druckanstieg fließt das Edukt in den Vorratsbehälter zurück.

Die Hahn 46 sperrt das Spülwasser zum Reinigen der Reaktoren.

Im Falle schnell reagierender Ausgangsverbindungen können alternativ alle benötigten Komponenten (Metallsalz, Azobarbitursäureverbindungen und Interkalat) im Vorratsgefäß 1 vorgelegt und gerührt bzw. zerkleinert werden.

Bei langsamer reagierenden Ausgangsverbindungen, bei denen auch die Verlackung und die Interkalation in unterschiedlichen pH Bereichen ablaufen sollen, wird wie folgt beschrieben allgemein verfahren. Azobarbitursäure (derivat) und die gelösten Metallsalze sind die Bestandteile der Suspension in Vorratsbehälter 1. Das Interkalat befindet sich in Vorratsbehälter 2. Die Hähne 37, 34, 31, 43 und 28 werden geschlossen. Die Hähne 47, 44, 48 und 49 werden geöffnet. Das Reaktionsgemisch und die pH beeinflussende Chemikalie aus Behälter 3 werden in der Mischdüse 22 gemischt und passieren den Reaktor 18. Über die pH-Sonde 16 wird der tatsächliche pH nach der Verlackungsreaktion gemessen und gegebenenfalls durch Änderung der Fördermenge der Steuerchemikalien aus Behälter 3 durch Pumpe 11 in den gewünschten Sollbereich gebracht. Die zu interkalierende Substanz wird hinter Reaktor 18 in den Strom der Dispersion des verlackten Azobarbitursäurederivates gepumpt und das entstandene Gemisch passiert den statischen Mischer 25. Die Lochblenden-kaskade hält so den Druck in den Reaktionszonen 17 und 18 auf ca.3 bar. Mit der pH Sonde 15 wird der pH-Wert der durchreagierten Dispersion gemessen. Die Steuerung 24 der Pumpe 12 regelt den Durchsatz der Steuerchemikalie aus einem weiteren Vorratsbehälter 4, um den Sollbereich des pH-Wertes für eine optimale Interkalationsreaktion zu erreichen.

### Beispiel 1

1100 g einer 11 gew.-%igen Na Azobarbitursäuredispersion, 100g Melamin, 80,5 g $CdCl_2$ *$H_2O$ in 1000 g deionisiertem Wasser werden im Vorratsbehälter 1 vorgelegt und 15 Minuten durch das Cavitron 8 umgepumpt. Die Hähne 37, 43 und 49 werden bzw. sind geschlossen. Bei geöffnetem Hahn 47 wird die Dispersion durch den auf 103°C temperierten Reaktor 18 gefördert. Der Massenstrom beträgt 6 kg/h. Der pH-Wert nach dem ersten Reaktor 18 wird mit der pH Sonde 16 gemessen und durch Zupumpen von Natriumacetatlösung aus Behälter 3 auf einem Wert von pH 2 gehalten. Im Auffangbehälter 6 wird der pH der Mischung mit der Sonde 19 gemessen und mit Natriumacetatlösung (aus Behälter 5) auf pH 5 angehoben, um die Reaktion zu beenden. Danach wird das Produkt auf einer Saugnutsche isoliert, mit heißem Wasser elektrolytfrei gewaschen, getrocknet und in einer Labormühle gemahlen. Das so erhaltene Pigmentpulver wird nach DIN 53238 in einen Alkyd-Melaminlack eingearbeitet.

Die Normfarbwerte des Pigmentes nach CIELAB sind:
X=10,66 Y=10,37 Z=7,35.
Die spezifische Oberfläche des Pigmentes nach BET beträgt 20,2 $m^2/g$.

## Beispiel 2

Man verfährt wie in Beispiel 1 beschrieben , setzt jedoch an Stelle des $CdCl_2$ *$H_2O$ 90,3 g $SnCl_2$*2 $H_2O$ ein. Der pH-Wert nach dem ersten Reaktor 18 wird auf pH 2,0 gehalten. Das erhaltene Pigmentpulver wird nach DIN 53238 in einen Alkyd-Melaminlack eingearbeitet.
Die Normfarbwerte des Farbortes des Pigmentes nach CIELAB sind:
X= 19.9 Y= 15.3 Z=6.2.
Die BET Oberfläche des Produktes beträgt 39 $m^2/g$.

## Beispiel 3

5000 g einer 11 gew.-%igen Na Azobarbitursäuredispersion, 480 g Melamin, 2250 g 25 gew.-%igen $NiCl_2 \cdot 6H_2O$-Lösung in 2500 g deionisiertem Wasser werden in Behälter 1 vorgelegt und 20 Minuten im Umlauf mit dem Cavitron (8) zerkleinert. Die Reaktortemperatur beträgt 114°C. Wie in Beispiel 1 wird das Gemisch durch die Reaktoren 17, 18 gepumpt. Der Massenstrom der Reaktionsmischung beträgt 8 kg/h und der pH-Wert der Mischung wird durch Zudosierung von Natriumacetatlösung auf pH 1,4 eingestellt. Das analog zu Beispiel 1 isolierte Pigmentpulver wird nach DIN 53238 in einen Alkyd-Melaminlack eingearbeitet.
Die Normfarbwerte des Farbortes des Pigmentes nach CIELAB sind
X=27,22 Y=22,46 Z=5,6.
Die BET Oberfläche des Pulvers beträgt 67 $m^2/g$.
Die Dispergierhärte des Pulvers beträgt 80.

## Beispiel 4

1000 g einer 12 gew.-%igen Na Azobarbitursäuredispersion, 450 g einer 24 gew.-%igen $NiCl_2 \cdot 6H_2O$-Lösung und 500 ml Wasser werden in Behälter 1 vorgelegt. 500 ml 20 Gew.-% Pluronic F38 (ein EO-PO Polykondensat, Hersteller BASF AG, mit der Molmasse 5000) Lösung werden in Behälter 2 vorgelegt. Hahn 43 ist geschlossen und Hahn 44 geöffnet, so dass das Polymer nach dem ersten Reaktor 18 zugemischt wird. Der Soll pH-Wert beträgt 0,8 und wird durch Zugabe von Natriumacetatlösung aus Behälter 3 geregelt. Der Massenstrom beträgt 6 kg/h. Die Reaktortemperatur ist 114°C. Das analog zu Beispiel 1 isolierte Pigmentpulver wird nach DIN 53238 in einen Alkyd-Melaminlack eingearbeitet.
Der Farbort des Pigmentes nach CIELAB beträgt bei:
X=28,4 Y=24,5 Z=5,5.
Die BET Oberfläche des Pulvers beträgt 30 $m^2/g$.

## Beispiel 5

564,1 g K-Salz der Cyaniminoazobarbitursäure und 338,7 g $MnCl_2$ *$4H_20$ werden in 71 deionisiertem Wasser in Behälter 1 gerührt und durch das Cavitron 8 über einen Zeitraum von 15 Minuten zerkleinert. 419,3 g Melamin werden mit 2 1 deionisiertem Wasser in Behälter 2 dispergiert.
Die Hähne 47, 44, 48, 49 sind geöffnet. Die Verlackung läuft in Reaktor 18 bei einem pH von 5. Der pH nach der Verlackungsreaktion wird mit der pH Sonde 16 gemessen und gegebenenfalls Na-Acetatlösung aus Behälter 3 in der Mischdüse 22 zugesetzt, um den Soll-Wert von pH 5 für die Verlackung zu erreichen. Die Melamindispersion aus Behälter 2 wird vor dem statischen Mischer 25 zudosiert und der Soll-pH von 2,5 für die Interkalation durch Zusatz von 10 %igen HCl-Lösung aus Behälter 4 erreicht. Der pH der Interkalationsreaktion wird vom pH-Meter 15 gemessen.
Das erhaltene Pigmentpulver wird nach DIN 53238 in einen Alkyd-Melaminlack eingearbeitet.
Der Farbort des Pigmentes nach CIELAB beträgt:
X=40 Y=28.15 Z=5.6.
Die BET Oberfläche des Pigmentes beträgt 32 $m^2/g$.

## Patentansprüche

1. Kontinuierliches Verfahren zur Herstellung von Metallkomplexen mehrwertiger Metallionen mit Mono-, Di-, Tri-

oder Tetraanionen einer Azo-Verbindung, die der Formel (I) oder einer ihrer tautomeren Strukturen entspricht

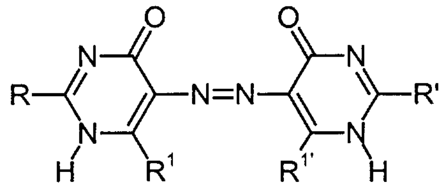

(I),

in der

R und R' unabhängig voneinander für die Reste -OH, $-NH_2$, -NH-CN, Arylamino, Acylamino oder p-Chlorphenyl stehen und

$R^1$ und $R^{1'}$ unabhängig voneinander -OH oder $-NH_2$ bedeuten,

die wenigstens eine von den vorgenannten chemischen Verbindungen verschiedene Verbindung (Interkalat) eingelagert enthalten,

wobei die Metalle der mehrwertigen Metallionen aus der folgenden Gruppe Ca, Zn, Cu, Fe, Mn, Ni, Co, Sr, Ba, Cr, Sn, Al, Mg, Cd, Pb und La ausgewählt sind,

durch Verrühren einer insbesondere wässrigen Dispersion aus dem Alkalisalz der Verbindung (I) mit dem Metallsalz des ausgewählten mehrwertigen Metalls bei einer Temperatur von 10 bis 35°C, insbesondere 20 bis 25°C, gegebenenfalls bei einem pH von 0,5 bis 5,5,

Zumischen einer wässrigen Lösung, Dispersion oder Emulsion des genannten Interkalates, gegebenenfalls unter Zerkleinern der Feststoffpartikel der Mischung vor und/oder nach dem Zumischen des Interkalates,

Durchleiten der Mischung durch eine Reaktionszone (18) mit einer Temperatur von 85 bis 140°C, bevorzugt 110 bis 120°C, unter einem Druck von insbesondere $10^5$ bis $4 \cdot 10^5$ Pa,

unter Regeln des pH-Wertes der in die Reaktionszone (18) eintretenden Mischung, so dass die die Reaktionszone (18) verlassende Produktdispersion auf einen Wert von pH 0,5 bis pH 3 eingestellt ist,

anschließend Einstellen des pH-Wertes der Mischung auf einen Wert von mindestens pH 5 und Isolieren des fertigen Metallkomplex-Interkalates.

2. Verfahren gemäß Anspruch 1, **dadurch gekennzeichnet, dass** das Zerkleinern der Feststoffpartikel der Mischung in einem Umpumpkreislauf, bevorzugt unter Durchleiten der Mischung durch ein Cavitron (8) erfolgt.

3. Verfahren gemäß Anspruch 1 oder 2, **dadurch gekennzeichnet, dass** die eingelagerte Verbindung (Interkalat) eine cyclische oder acyclische organische Verbindung ist, insbesondere Melamin oder ein Melaminderivat oder ein Polykondensat, bevorzugt solche auf Basis von Harnstoff und Formaldehyd oder ein Ethylenoxid-propylenoxid Blockcopolymerisat ist.

4. Verfahren nach einem der Ansprüche 1 bis 3, **dadurch gekennzeichnet, dass** die Verweilzeit der Mischung in der Reaktionszone (18) von 2 bis 10 min beträgt.

5. Verfahren nach einem der Ansprüche 1 bis 5, **dadurch gekennzeichnet, dass** man zur Herstellung von 1:1 Azo-Metall-Komplexen, die der Formel (Ia) oder einer ihrer tautomeren Formen entsprechen,

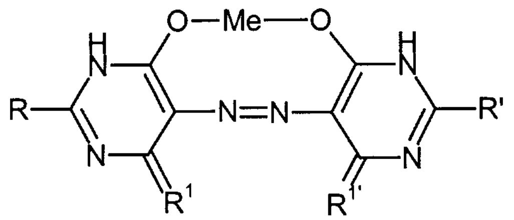

(Ia)

worin

| | |
|---|---|
| Me | die in Anspruch 1 genannten Metalle bedeutet, |
| R und R' und $R^1$ und $R^{1'}$ | die in Anspruch 1 angegebenen Bedeutungen besitzen |

äquimolare Mengen des Na-, Li- oder K-Salzes der Azoverbindung und des Metallsalzes einsetzt.

**6.** Verfahren nach einem der Ansprüche 1 bis 5, **dadurch gekennzeichnet, dass** der pH-Wert in der Reaktionszone unter Zugabe von starken und schwachen Basen eingestellt wird.

**7.** Pigmentpräparation, enthaltend als Pigment wenigstens ein Metallkomplex-Interkalat, erhalten aus dem Verfahren gemäß einem der Ansprüche 1 bis 6 und wenigstens ein Dispergiermittel.

**8.** Verwendung der Metallkomplex-Interkalate, erhalten aus einem Verfahren gemäß einem der Ansprüche 1 bis 6 zur Herstellung von Druckfarben, Leimfarben oder Binderfarben, für die Massefärbung von synthetischen, halbsynthetischen oder natürlichen makromolekularen Stoffen, insbesondere Polyvinylchlorid, Polystyrol, Polyamid, Polyethylen oder Polypropylen, sowie für die Spinnfärbung von natürlichen, regenerierten oder künstlichen Fasern, wie z.B. Cellulose-, Polyester-, Polycarbonat-, Polyacrylniril- oder Polyamidfasern, sowie zum Bedrucken von Textilien und Papier.

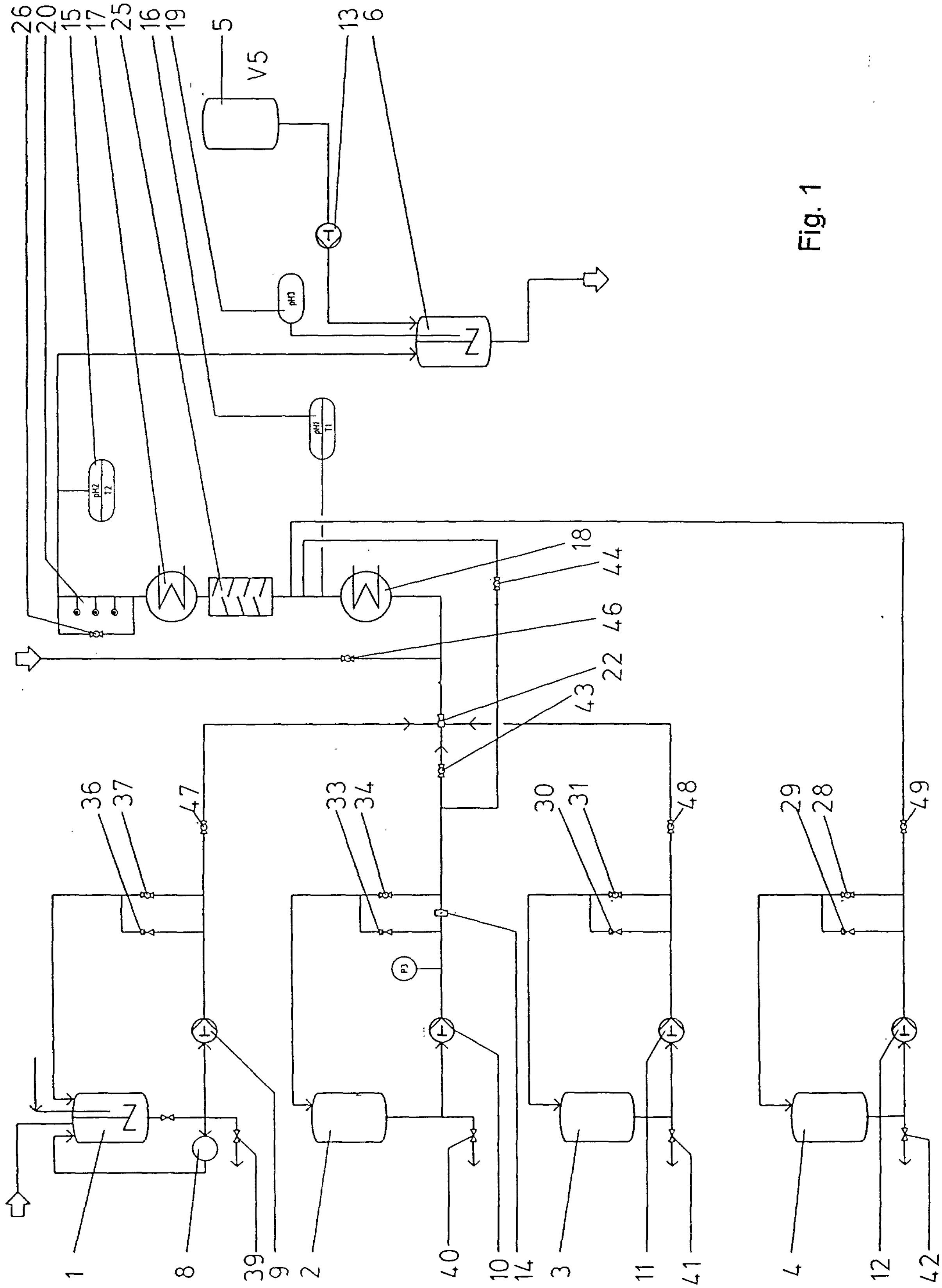

26
20
15
17
25
16
19
5
V5
13
6
pH3
pH1 T1
pH2 T2
18
44
46
22
43
36
37
47
33
34
30
31
48
29
28
49
P1
1
8
39
9
2
40
10
14
3
11
41
4
12
42

Fig. 1